(19)

Europäisches Patentamt
European Patent Office
Office européen des brevets

(11) **EP 2 830 374 A1**

(12) **EUROPEAN PATENT APPLICATION**

(43) Date of publication:
28.01.2015 Bulletin 2015/05

(51) Int Cl.:
**H04W 72/04** (2009.01)

(21) Application number: **13306058.2**

(22) Date of filing: **23.07.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Pefkianakis, Ioannis**<br>  **92443 Issy les Moulineaux (FR)**<br>• **Lundgren, Henrik**<br>  **92443 Issy les Moulineaux (FR)** |
| (71) Applicant: **Thomson Licensing**<br>**92130 Issy-les-Moulineaux (FR)** | (74) Representative: **Perrot, Sébastien**<br>**Technicolor R&D France Snc**<br>**975, avenue des Champs Blancs**<br>**CS 17616**<br>**35576 Cesson-Sévigné Cedex (FR)** |

(54) **Method of bandwidth allocation in a wireless system, corresponding device and system**

(57) The present invention generally relates to bandwidth allocation in a wireless system. A method of bandwidth allocation comprises an allocation (45) of a most energy efficient channel bandwidth setting according to a required application data rate and based on a power consumption and a throughput performance.

Fig. 4

EP 2 830 374 A1

**Description**

**1. Field of invention.**

The present invention generally relates to optimization of power consumption, and in particular allows optimization of power consumption in a wireless system.

**2. Technical background**

Wireless data transmission is usually consuming some energy and there is a need for them, especially for devices using a battery to save energy. Some systems, such as systems based on wake periods and sleep periods. These systems enabling to reduce power consumption; however, they are not optimized to save energy.
Thus, there is a need to improve the save of energy in wireless systems.

**3. Invention summary**

The present invention proposes to alleviate some of the inconveniences of prior art by enabling some improvement of energy saving in at least a device (e.g. an access point or a user device) of a wireless systems (e.g. a wireless network or at least two devices able to communicate through a wireless link). To achieve this purpose, the invention proposes a method of bandwidth allocation in a wireless system comprising an allocation of a most energy efficient channel bandwidth setting according to a required application data rate and based on a power consumption and a throughput performance.
More specifically, the method comprises:

- a determination of an estimation of an energy consumption settings to a required application data rate for at least one channel bandwidth setting, based on a power consumption estimation and an effective throughput estimation;
- a selection of a most energy efficient channel bandwidth among the estimated energy consumption settings for the required application data rate, resulting in a selected channel bandwidth for the required data rate; and
- an allocation of the selected channel bandwidth for the required data rate.

According to a specific embodiment, the method comprises an estimation of a power consumption including a measurement of power consumption according to at least a channel bandwidth.
According to a specific embodiment, the method comprises an estimation of effective throughput including a measurement of throughput according to at least a channel bandwidth.
Specifically, the selection of a most energy efficient channel bandwidth is made among the channel bandwidths, which have an estimated throughput greater that the required application data rate.
In some invention embodiments, the selection of a most energy efficient channel bandwidth is taking into account another parameter, among at least a channel associated to a channel bandwidth or wireless configuration.
According to different embodiments, the required data rate is obtained from an estimation of a real traffic demand or from a request of data rate.
The invention also concerns a wireless system device comprising a module of allocation of a most energy efficient channel bandwidth setting according to a required application data rate and based on a power consumption and a throughput performance.
According to a specific embodiment, the wireless system device comprises:

- a module of determination of an estimation of an energy consumption settings to a required application data rate for at least one channel bandwidth setting, based on a power consumption estimation and an effective throughput estimation;
- a selector adapted to select a most energy efficient channel bandwidth among the estimated energy consumption settings for the required application data rate, resulting in a selected channel bandwidth for the required data rate; and
- a module of allocation of the selected channel bandwidth for the required data rate.

Specifically, the wireless system device comprises functionalities of an access point to a wireless network and more specifically, gateway functionalities, including an interface between an external network and a wireless local area network. Alternatively, the wireless system device comprises wireless user device functionalities.
The invention also concerns a wireless system, comprising wireless system devices including at least an access point and at least a wireless device; according to the invention, the wireless system comprises at least a module of allocation of a most energy efficient channel bandwidth setting according to a required application data rate (e.g. one module for the access point and/or one module for each wireless device) and based on a power consumption and a throughput performance of at least one of the wireless system device adapted to receive data from another wireless system device.

## 4. List of figures

More advantages of the invention will appear through the description of particular, non-restricting embodiments of the invention, illustrated or not by means of the accompanying drawings. The description refers to the appended drawings in which:

- Figure 1 represents a wireless network;
- Figures 2 and 3 represent exemplary architectures of respectfully an access point and a wireless device of the network represented in figure 1, according to a specific embodiment of the invention;
- Figure 4 represents a video receiving method implemented in the access point of figure 2 or in the device of figure 3;
- Figure 5 illustrates a functional diagram implemented in devices of wireless network of figure 1; and
- Figure 6 illustrates an example of communication exchanges between different elements of the network of figure 1, respectively including access point of figure 2 wireless device of figure 3.

## 5. Detailed description of the invention

One of the key features that the IEEE 802.11 n standard ratified in 2009 utilizes to boost speed to 600Mbps is channel bonding. While the legacy IEEE 802.11a/b/g devices use a single 20MHz channel, the 802.11 n can operate in the 40MHz mode over two adjacent channels. The MIMO IEEE 802.11 ac standard drafts specify communication systems able to provide gigabit speeds by allowing 160MHz channels.

We have realized that wider channels come at a cost of increased power consumption. Our measurements with 802.11 n commodity network interface cards (NICs) show that power consumption monotonically grows with channel bandwidth. More precisely, we have measured the power consumption of receiver (including antenna, front end and receiving chain) into two different states:

- idle state: it corresponds to a power state where the receiver is just listening incoming transmissions (including beacon frames) and is not able to decode data packets;
- active state: it corresponds to a power state where the receiver is actively able to receive and decode data packets.

For a bandwidth equal to 20 MHz, a WiFi ® chip is consuming about 475mW in idle mode and 525 mW in active mode; for a bandwidth equal to 40 MHz, the same WiFi ® chip is consuming about 550mW in idle mode and 700 mW in active mode. So, we observe that a 40MHz configuration can consume 31% more power compared with a 20MHz setting. As a result the fastest channel bandwidth setting may not be the most energy efficient.

The invention is proposing a method, device or system that allocates a most energy efficient channel bandwidth setting according to a required application data rate and based on a power consumption and a throughput performance.

So, according to miscellaneous embodiments, the invention is proposing a solution that is enabling to save energy while keeping a required QoS (Quality of Service), and, in particular, a data rate. In particular, the invention is aiming at considering an off-state and an on-state of a receiver in a wireless system device. In the off-state, the receiver cannot receive any frames and its power consumption is null or very low compared to idle or active state; typically, it corresponds to a sleep state in a wireless system such as WiFi or IEEE 802.11 systems. In the on-state (typically idle or active states), the receiver is still powered.

Advantageously, the invention is implemented in a wireless network access point, e.g. a gateway, that allocates channel bandwidth to communication between the access point and devices of the wireless network, according to a required application data rate and based on a power consumption and a throughput performance of each device of the wireless network, receiving frames from the access point.

Here, a variant must be understood as a variant of the invention and an embodiment or implementation are an embodiment or implementation of the invention.

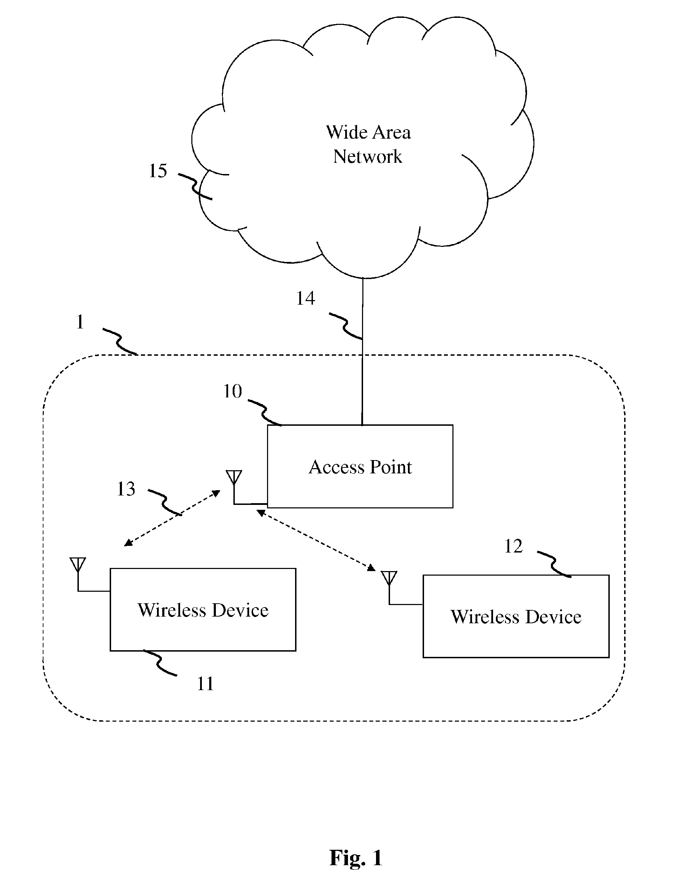

Figure 1 represents a typical environment where the invention is implemented. The figure 1 comprises a wireless Local Area Network (or LAN) 1 and an external network 15. The external network 15 may include for example a wide area network, a mobile network (e.g. a cellular network) and/or a TV provider network.

The network 1 comprises a wireless data communication network managed by an access point 10. The access point 10 may be connected to external network 15, that is wireless or wired according to various possible implementations. According to specific implementation, the access point 10 is a gateway (i.e. comprises gateway functionalities, including an interface between the external network 15 and wireless LAN 1).

The network 1 also comprises wireless devices 11, 12 connected to the access point 10 through a wireless link 13 (e.g. of WiFi ® type); these devices 11, 12 may be any wireless device, that can communicate with the access point 10, e.g. a mobile phone, a set top box, a computer, a tablet, a game device... Access point 10 provides the devices in the network 1 with an access to the network 15. Here, the access point 10 and wireless devices 11 and 12 are considered as wireless system devices. Wireless devices 11 and 12 are considered as wireless user devices (i.e. having user-device functionalities).

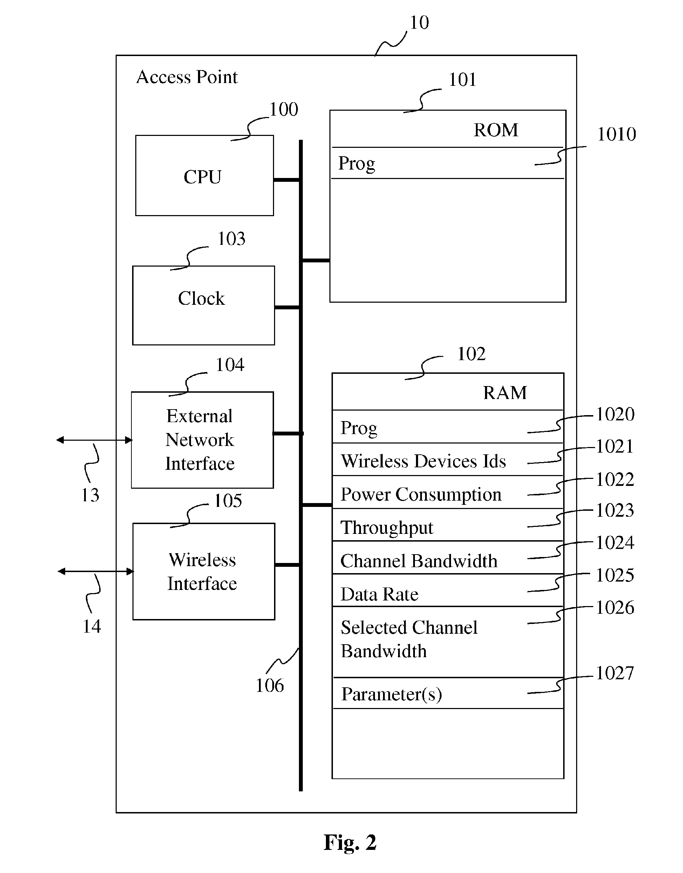

**Figure 2** diagrammatically shows a preferred embodiment of the access point 10 of the network 1.

According to the invention, an access point is a device that is able to provide an access to or from a wireless network. The access point 10 comprises, connected to each other by an address and data bus 106, also transporting a clock signal:

- a microprocessor 100 (or CPU) ;
- a non-volatile memory of the ROM type (Read Only Memory) 101 ;
- a Random Access Memory or RAM 102 ;
- a clock 103 ;
- an external network interface 104 adapted to be connected to the network 15 through a link 13; and
- a wireless network interface 105 adapted to be connected to the wireless link 14 or more generally the wireless LAN 1.

Each of the elements 100 to 106 is well known by a person skilled in the art. These common elements are not described here.

The ROM memory 101 notably comprises a *"prog"* program 1010. The algorithms implementing the steps of the method specific to the invention and described below are stored in the memory ROM 101 associated with the gateway 10 implementing these steps, and more specifically in program 1010. When powered up, the microprocessor 100 loads in RAM 102 and runs the instructions of these algorithms.

According to variant of the invention, the ROM 101 also comprises information representative of power consumption and data rate according to an allocated channel bandwidth, or any other data provided by a wireless chip vendor, the wireless interface 105 including this chip.

The random access memory 102 notably comprises:

- in a register 1020, a loaded program corresponding to program 1010 ;
- wireless device identifiers 1021, especially identifier of access point 10 and identifiers of other devices of wireless network 1 ;
- power consumption data 1022 ;
- throughput data 1023 ;
- channel bandwidth data 102 ;
- Data rate information 1025 ;
- Selected bandwidth(s) 1026 ; and
- One or several other parameters 1027, that are used for selection of channel bandwidth according to some variants of invention.

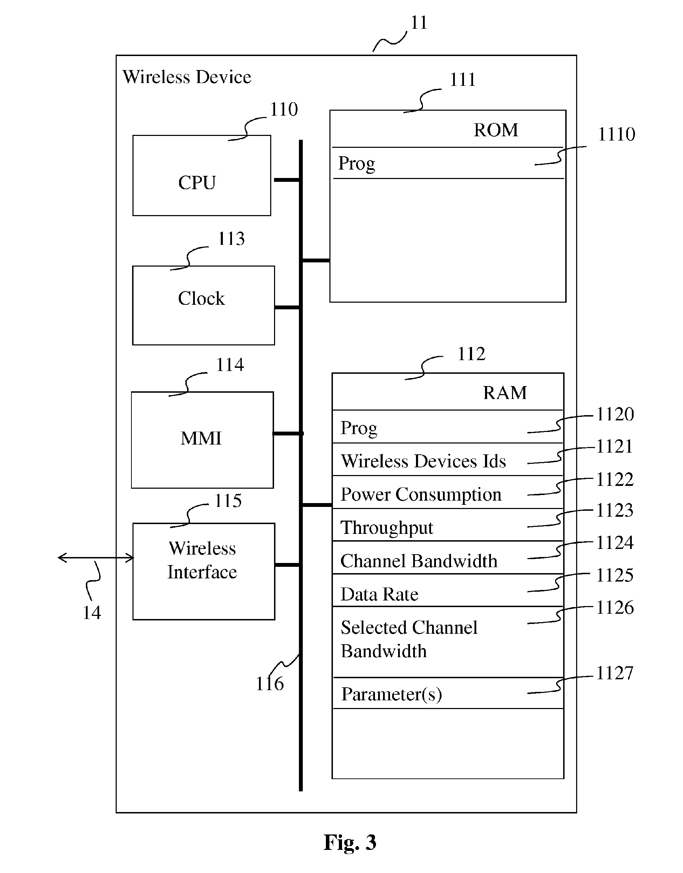

**Figure 3** diagrammatically shows a preferred embodiment of the device 11 of the network 1.

The device 10 comprises, connected to each other by an address and data bus 116, also transporting a clock signal:

- a microprocessor 110 (or CPU) ;
- a non-volatile memory of the ROM type (Read Only Memory) 111;
- a Random Access Memory or RAM 112;
- a clock 113 ;
- a man-machine interface (or MMI) 114 (e.g. a screen, a keypad);
- a wireless network interface 115 adapted to be connected to the wireless link 14; and
- One or several other parameters 1127, that are used for selection of bandwidth according to some variants of invention.

Each of the elements 110 to 116 is well known by a person skilled in the art. These common elements are not described here.

It is noted that the word "register" used in the description of the memories 101, 102, 111 and 112 designates in each of the memories mentioned, a memory zone of low capacity (some binary data) as well as a memory zone of large capacity (enabling a whole program to be stored or all or part of the data representing an audio/video received flow).

The ROM memory 111 notably comprises a *"prog"* program 1110. The algorithms implementing the steps of the method specific to the invention and described below are stored in the memory ROM 111 associated with the gateway 10 implementing these steps, and more specifically in program 1110. When powered up, the microprocessor 110 loads in RAM 112 and runs the instructions of these algorithms.

The random access memory 112 notably comprises:

- in a register 1120, a loaded program corresponding to program 1010 ;
- wireless device identifiers 1121, especially identifier of access point 10 and device 11 ;
- power consumption data 1122 ;
- throughput data 1123 ;
- channel bandwidth data 112 ;
- Data rate information 1125 ;
- Selected bandwidth(s) 1126; and
- One or several other parameters 1127, that are used for selection of channel bandwidth according to some variants of invention.

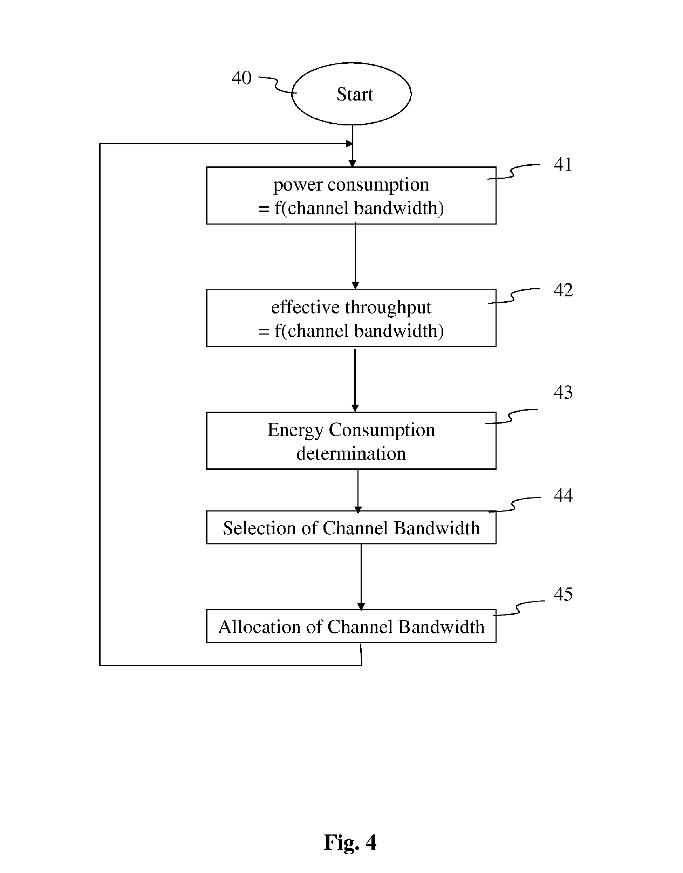

**Figure 4** schematically illustrates bandwidth allocation in the wireless network 1, as implemented in the access point 10 according to a specific implementation of the invention.

During a first step 40, the access point 10 initializes its various components and variables.

Then, during a step 41, the access point 10 determines an estimation of power consumption according to at least a channel bandwidth for any receiving device of the wireless network 1. According to specific embodiments of the invention, this determination of power consumption is based on a power consumption estimation performed by the access point 10 using data provided by the receiving device(s) or by an estimation received from one or several receiving devices, that estimates their power consumptions in reception for at least a channel bandwidth and forward them to the access point 10 in details or in an aggregated form. Advantageously, a power consumption estimation is performed for a set of channel bandwidths, that can be used by the devices of wireless network 1. According to a specific embodiment, the power consumption is made according to at least two different states of the receiving device(s), corresponding to an on-state: e.g. in idle state or in active state (other states such as transmitting state can also be considered). According to another specific embodiment, the power consumption is made on a single state corresponding to an on-state and based on average power consumption in on-state, computed by the receiving device(s). Advantageously, the power consumption in off state is assumed to be null. According to other variants, the power consumption in off state is also estimated.

Then, during a step 42, the access point 10 determines an estimation of an effective throughput, i.e. a number of bits per time unit, that can be received or transmitted over the wireless channel, according to at least a channel bandwidth. According to specific embodiments of the invention, this determination of effective throughput is based on a power consumption estimation performed by the access point 10 using data provided by the receiving device(s) or by an estimation received from one or several user devices; in this latter case, the user device(s) estimates (estimate) its (their) power consumptions in reception for at least a channel bandwidth and forward them to the access point 10 in details or in an aggregated form. Advantageously, the effective throughput estimation is performed for the set of channel bandwidths used for step 41. According to different variants of the invention, step 42 estimation does or does not take into account overhead (such as overhead due to physical and/or MAC (Medium Access Channel) layers) or acknowledgment. Effective throughput can be estimated based on the MAC/PHY-layer information available in a wireless device (e.g., PHY rate, loss, contention, busy time, noise, interferences). Effective throughput is, for example, obtained using the following formula:

$$\text{Effective Throughput} = Ntx/(1\text{-}Loss)/(T + Ntx/Rate);$$

wherein,

- *Ntx* represents a number of transmitted data (e.g. a number of bits transmitted in MAC-layer frames (excluding the headers);
- *Loss* represents a loss rate;
- *T* represents a time overhead; and
- *Rate* represents a physical rate.

Loss Rate is a frame loss ratio at physical layer. It is, for example, estimated either by using information associated to Ack or Nack frames (only acknowledged frames are not lost) or SNR (Signal to Noise Ratio) techniques. Time overhead is estimated at the MAC layer. The physical rate is the rate at the physical layer.

According to different variants of steps 41 and 42, the power consumption estimation and/or effective throughput estimation is or are based on defined data, that can be provided by wireless chip makers or based on power models and defined in ROM 101.

According to another variant of steps 41 and 42, the power consumption estimation and/or effective throughput estimation is or are based on measurements made by one or several devices of network 1, this or these devices providing information representative of these measurements to the access point 10. The access point aggregates measurements information to get a reliable estimation of power estimation. According to different variants of the invention, measurements for active state are based on traffic that is purposely generated by the access point 10 or on the fly capture of usual traffic.

The power consumption estimation and/or effective throughput estimation considered by the access point 10 is or are either the same for all devices of network 1 or specific to each device or group of devices of network 1. When, it is or they are the same, it enables a simplified implementation of the invention; else, it enables more accurate estimations, when the access point get some information on devices (e.g. type of wireless interface or wireless chip used in the devices).

Then, during a step 43, the access point 10 determines an energy consumption setting to a required application data rate for at least one channel bandwidth setting, based on a power consumption estimation and a throughput estimation. According to specific embodiments of the invention, this determination of an energy consumption setting is based on an energy consumption setting estimation performed by the access point 10 using power consumption and effective throughput estimation determined by the access point 10 or by an estimation received from one or several user devices, that determine(s) the energy consumption setting in reception for at least a channel bandwidth and forward them to the access point 10. According to different implementations, the required data rate is obtained from an estimation of a real traffic demand or from an explicit request of data rate (e.g. from a wireless device). Advantageously, the effective throughput estimation is performed for the set of channel bandwidths used for steps 41 and 42. According to an advantageous implementation of the invention, an estimation of energy consumption for a given channel bandwidth is obtained as being the sum of energy consumption for each state for this given channel bandwidth, if several states are identified and considered by the access point 10 or as an average energy consumption. The energy consumption for each state is obtained by multiplying an estimation of power consumption obtained in step 41 for this state by an estimation of duration of data transmission.

Typically, when two states, sleep (corresponding to off-state the device being not able to receive and transmit data or control frames on wireless link) and active (corresponding to on-state, the device being able to receive and transmit data or control frames on wireless link) are identified, the estimated energy, E, consumed in one unit of time is equal to :

$$E = P_{rx}.T_{rx} + P_{sleep}.T_{sleep}.$$

where,

- $P_{rx}$ represents an estimation of Power consumption for data reception in active state, as estimated in step 41;
- $T_{rx}$ represents needed time in one unit of time to receive the required application data rate (active state);
- $P_{sleep}$ represents estimation of Power consumption in sleep state, as estimated in step 41;
- $T_{sleep}$ represents the time in idle state in one unit of time.

Assuming an effective throughput of 40 Mbps for a 20MHz band (if a 16 QAM modulation is used, enabling a physical bit rate of 3 bits/symbol and, the maximum theoretical throughput would be 60Mbps; here, some overhead and loss are considered such as mentioned above, leading to an effective throughput equal to 4Mpbs), if a 10 Mpbs rate is wished, $T_{rx}$ = 0,25 and $T_{sleep}$ = 0,75; with $P_{rx}$ = 525 mW and $P_{sleep}$ = 475mW, the Energy consumed during one unit of time is 0,25x525 + 0,75x475= 487,5 mW for a 20MHz channel bandwidth. Assuming an effective throughput of 80 Mbps for a 40MHz band, if a 10 Mpbs rate is wished, $T_{rx}$ = 0,125 and $T_{sleep}$ = 0,875; with $P_{rx}$ = 700 mW and $P_{sleep}$ = 550mW, the Energy consumed during one unit of time is 0,125x700 + 0,875x550= 568,5 mW for a 40MHz channel bandwidth.

According to a variant, when three states, sleep, active and idle states (idle and active states corresponding both to an on-state; the device on idle state cannot receive or transmit data on wireless link, however, the wireless interface is on) are identified, the estimated energy, E, consumed in one unit of time is equal to :

$$E = P_{rx}.T_{rx} + P_{idle}.T_{idle} + P_{sleep}.T_{sleep}.$$

where,

- $P_{rx}$, $T_{rx}$, $P_{idle}$ and $T_{idle}$ are defined above;
- $P_{idle}$ represents estimation of Power consumption in sleep state, as estimated in step 41;
- $T_{idle}$ represents the time in sleep state in one unit of time.

$T_{rx}$ is determined using the data rate requirement and the estimation of an effective throughput according to at least a channel bandwidth and, the effective throughput being equal to or greater than a required application data rate for at least one channel bandwidth setting. $T_{idle}$ is defined by another requirement (e.g. specific configuration or wireless chip vendor requirement that requires a minimum idle time, e.g. 200ms for each transition between active state and another state). $T_{sleep}$ is the remaining time after determination of $T_{active}$ and $T_{idle}$. If the remaining time for $T_{sleep}$ is not sufficient, the wireless interface will never go to sleep and $T_{idle}$ is the remaining time after determination of $T_{active}$ for a given bandwidth.

Then, during a step 44, the access point 10 selects a channel bandwidth for subsequent data transmission to corresponding devices, as the most energy efficient channel bandwidth (i.e. that gives the lower consumption of energy) among the estimated energy consumption settings estimated at step 43 for the required application data rate, resulting in a selected channel bandwidth, wherein the effective throughput is greater than the required data rate.

In example given above, both 20MHz and 40MHz bandwidths are offering an effective throughput greater that the required data rate (10Mbps). Then, there can be both selected. For 20MHz, the estimated energy per unit of time is 487,5 mW that is lower than 568,5 mW for a 40MHz channel bandwidth. Then, according to the invention, the 20MHz channel bandwidth is selected during step 44.

According to a variant of invention, the steps 41, 42 and 43 are performed for channel bandwidths enabling the required data rate (then, step 42 is advantageously performed before step 41).

According to a variant of invention, the steps 41 and/or 42, and steps 43 and 44 are taking into account at least another parameter in addition to channel bandwidth; then, the power consumption and/or the effective throughputs are estimated according to the channel bandwidth and the other parameter(s): for instance, for a given bandwidth, there may be variation of effective throughput according to a physical channel (e.g. frequency band: some frequency bands may be subject to different interferences and/or noise); in this condition, in a variant of step 42, the effective throughput is estimated for different values of channel bandwidth and the other parameter(s) (e.g. physical channel); then, during step 43, the energy consumption estimation is based on the results of steps 41 and 42, one of these steps or both providing an estimation according to channel bandwidth and at least one other parameter; according to a variant, steps 41 and 43 are performed only for channel bandwidth enabling the required data rate (then, step 42 is advantageously performed before step 41). Then, during a step 44, the access point 10 selects a channel bandwidth for subsequent data transmission to corresponding devices, as the most energy efficient channel bandwidth among the estimated energy consumption settings estimated at the variant of previous step 43 for the required application data rate. The other parameter(s) is (are) or example chosen among physical channel (frequency band) and a wireless configuration of network or receivers (including number of antennas in reception, use of MIMO (Multiple In Multiple Out) antennas or not, level of emission power, configuration of reception amplifiers, frame aggregation of not, acknowledgment policy, capabilities of receivers).

Then, during a step 45, the access point 10, allocates a channel bandwidth equal to the resulting bandwidth for frames to be transmitted to device(s) associated to the resulting bandwidth (i.e. corresponding to the at least one device requiring the required data rate used in step 44 to select the channel bandwidth and which the steps 41, 42, 43 have targeting, if devices of network 1 have been differentiated during these steps).

Then, step 41 is reiterated. According to a variant, this reiteration of step 41 after step 45 is conditioned on a trigger; this trigger is activated periodically (e.g. every minute) or on specific events (e.g. change in throughput, greater than a threshold) or on change of required data rate.

The method of bandwidth allocation as implemented in the access point 10 has been disclosed into details in view of figure 4, considering that the receivers are any device of wireless network 1: this corresponds to downlink transmission (i.e. from access point 10 to wireless devices). According to a variant of invention, a very similar method with the same scheme is implemented in a wireless device from uplink transmission from this device to the access point 10: the main steps of the method disclosed above applies, the difference being that the considered receiver is the access point 10 and that the wireless device is the transmitter.

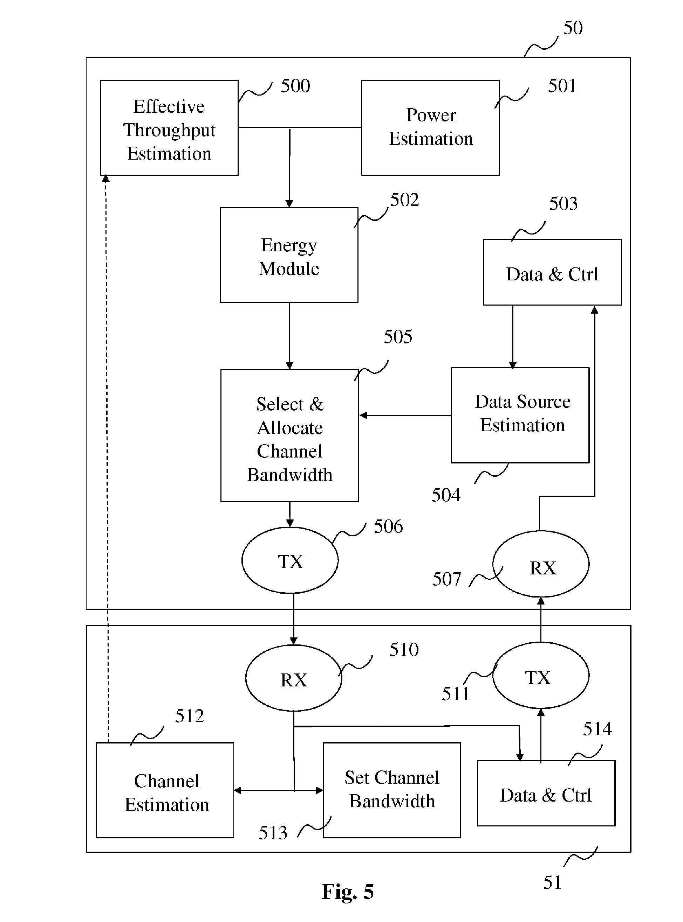

**Figure 5** illustrates a functional diagram implemented in an transmitter 50 and a receiver 51. According to a first embodiment, the transmitter 50 is the access point 10 and receiver 51 is any of wireless devices 11 and 12: this correspond to an allocation of channel bandwidth for downlink. According to a second embodiment, the transmitter 50 is any of wireless devices 11 and 12 and receiver 51 is the access point 10: this correspond to an allocation of channel bandwidth for uplink. According to a variant of invention, channel bandwidth allocation is implemented for both uplink and downlink: then, the access point 10 and the wireless devices (or at least one of them) are including a mix of means of transmitter 50 and of receiver 51.

The transmitter 50 comprises:

- a module 500 of effective throughput estimation adapted to perform step 42, using an information provided by the receiver 51 ;
- a module 501 of power estimation adapted to perform step 41;
- a module 502 of energy estimation adapted to perform step 43 and receiving as input outputs of modules 500 and 501;
- a receiver module 507 receiving frames from receiver 51;
- a module 503 of management of data and control information received from receiver module 507;
- a module 504 of estimation of required application data rate using information provided by the module 503 (request from receiver 51 or estimated required application data rate);
- a module 505 of selection (or selector) and allocation of channel bandwidth able to perform steps 44 and 45; according to some embodiments of the invention, the module 503 uses the estimations provided by module 502 and checks that selects a bandwidth enabling a required application data rate provided by module 504; in other embodiments, the module 503 uses the estimations provided by the receiver 51; the module 505 allocates the channel bandwidth using the selected and allocated bandwidth; in particular, it adapts the channel bandwidth used to transmit data to the receiver 51 and order the receiver 51 to use the allocated channel bandwidth for reception channel by sending a corresponding request to the receivers 51 to use the selected and allocated channel bandwidth; and
- a transmitter module 506, that transmits any frame to the receiver 51; the selected and allocated bandwidth is used to transmits data frame to the receiver 51.

The receiver 51 comprises:

- a receiver module 510 receiving frames from transmitter 50;
- a module 512 adapted to estimate real power consumption of receiver 50 in different reception states (such as idle or active, and optionally sleep) and different channel bandwidth; according to variant of inventions, the module 512 is adapted to estimate real power consumption according to at least another parameter among physical channel and wireless configuration of receiver 51. The module 512 is adapted to provide to module 500, an information representative of effective throughput according to channel bandwidth;
- a module 513 adapted to set channel bandwidth to receive data frames from transmitter 50 according to channel bandwidth allocated by module 505;
- a module 514 of management of data and control information received from receiver module 510 and adapted to prepare frames to be transmitted to module 50; and
- a transmitter module 511 transmitting frames to transmitter 50, as requested by module 514.

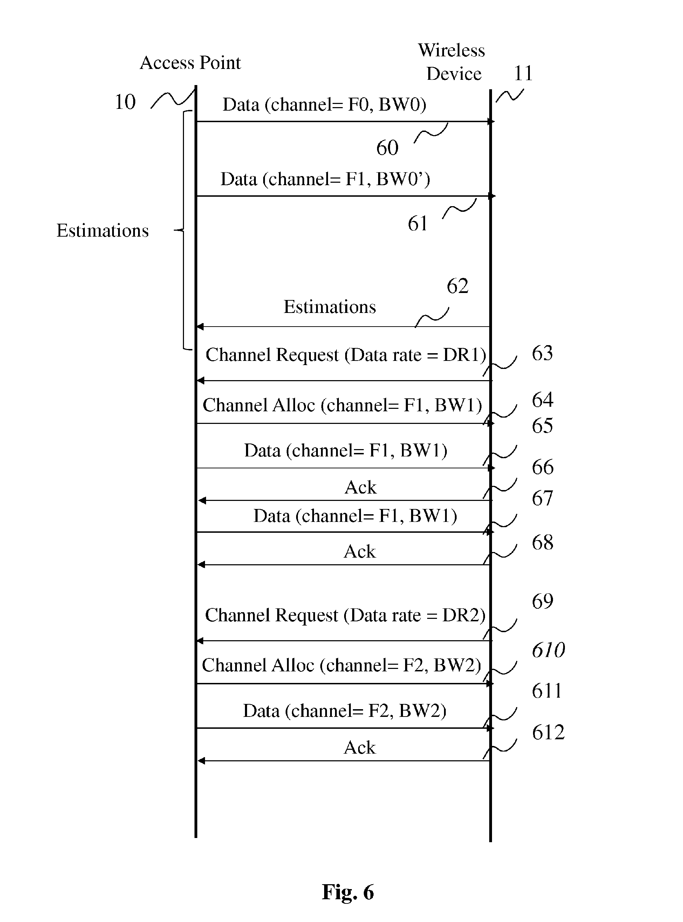

**Figure 6** illustrates an example of communication exchanges between the access point 10 and wireless device 11 during two exemplary steps: an estimation step and a change of channel bandwidth step.

During the estimation step, the wireless access point 10 sends data frames 60, 61 to the wireless device 11 using different channel bandwidths *BW0*, *BW0*'. According to different variants, the frequencies *F0*, *F1* used respectively by frames 60 and 61 are the same or different. Using the received frames 60, 61, the wireless device 11 measures the effective power consumed by the device 11 to receive and manage corresponding frames and the effective throughput. According to a variant, the wireless device 11 measures the effective consumed power and effective throughput on frames received by the device 11 and including another destination than the device 11 (the device 11 takes advantage of making some measurements on frames, that it can sniff and monitor).

Then, the device 11 transmits in a data frame 62 including for each channel frequencies, when available, all or part of consumption and effective throughput estimations or aggregated estimations (e.g. average, minimum or maximum values, or a selected specific value (e.g. the latest one)). According to another variant, the device 11 determines a most energy efficient channel bandwidth setting according to a required application data rate and based on a power consumption and a throughput performance; then, the device 11 transmits to the device 10, a frame including information regarding the determined most energy efficient channel bandwidth setting or a request to allocate the determined most energy efficient channel bandwidth setting.

After measurement step, the access point 10 has all elements to determine a most energy efficient channel bandwidth setting according to different data rate required by the wireless device 11 and can enter a step of channel bandwidth allocation.

The access point 10 receives first a channel bandwidth request 62 including a required data rate *DR1.*

Then, the access point 10 determines a most energy efficient channel bandwidth setting as mentioned before, that enables the required data rate *DR1* and allocates a corresponding channel at frequency *F1* and a channel bandwidth *BW1* to the wireless device 11 by sending a dedicated frames 63 to the device 11. According to different variants, the access point 10 or the wireless device 11 determine the time when the wireless device 11 is able to send and receive frames (active state in on-state) and informs each other of this time.

Then, the access point 10 sends some data 64 to the device 11 using the allocated channel bandwidth setting, at a time, when the device 11 is in an active state, and advantageously, at the beginning of active state period to optimize the use of allocated channel bandwidth. Then, the device 11 acknowledges a good reception of data 64 by sending back an acknowledgment 65. Then, the access point 10 continues to send some data 65 to the device 11, that acknowledges them in a frame 67. According to a specific embodiment, the device 11 continues to perform some consumption and throughput measurements on received frame 64 and 66 to refine or update measurements. According to a specific embodiment, if necessary, the device 11 sends back corresponding information to the access point 10, that updates selection and allocation of channel bandwidth accordingly.

The access point 10 receives another channel bandwidth request 68 including a required data rate *DR2*. Then, the access point 10 reiterates the different step, by selecting and allocating a new channel settings using a frequency F2 and a channel bandwidth *BW2*; the access point 10 sends a corresponding channel setting frame 69 to the device 11; then, it sends a data frame 610 using this channel setting and the device 11 sends back an acknowledgment 611.

Naturally, the invention is not limited to the embodiments previously described.

In particular, the invention is compliant with any type of wireless system device that is adapted to allocate a channel bandwidth for data transmission/reception. In particular, the invention is compliant with local area networks or wireless links, that may be based on protocols using IEEE 802.11 specifications and its variants, IEEE 802.15 specifications and its variants, Wireless Alliance ® certification, NFC (Near Field Communication) specifications.

According to the invention, an allocation of a most energy efficient channel bandwidth setting according to a required application data rate and based on a power consumption and a throughput performance or an allocation of a selected channel bandwidth for a required data rate, is made either by a device that requests an allocation of channel bandwidth or that is able to order itself a channel bandwidth setting.

According to different embodiments of the invention, estimations are based on real measurements (that provides more reliable data) or on information provided by chip maker or on average estimations, that may be provided by any means (e.g. predetermined data registered in one or several device of the wireless network, data uploaded from a distant server, data configured locally).

According to some embodiments of the invention, the selection and allocation of a most energy efficient channel bandwidth is only based on effective throughput and power consumption. According to other embodiments, the selection and allocation of a most energy efficient channel bandwidth is taking into account at least another parameter: e.g. another parameter includes a wireless configuration, that may authorize or, on the contrary, forbid one or several channel bandwidths; e.g. another parameter includes the possible frequencies: the different estimations may be based on both channel bandwidth and frequencies; then, the channel bandwidth selection and allocation will select a most energy efficient channel bandwidth associated with one or several frequency considering corresponding estimations.

According to a specific embodiment of the invention, the required data rate is explicitly required in a request obtained from an application, a user and/or a device. According to another embodiment, the required data rate is a default data rate or an estimated data rate based on measurement or estimation of real traffic demand, or on a specific configuration.

According to some specific embodiments, a channel bandwidth may be allocated specifically for a required data rate to a device or a group of devices in a wireless system, a different value of channel bandwidth being allocated for the same required data rate to other device of the wireless system. This enables to take into account the different effective throughputs and/or power consumptions of each device. According to other embodiments, a same channel bandwidth is allocated for a required data rate to all wireless devices (excluding access point) of a wireless system. This enables a simpler implementation.

The implementations described herein may be implemented in, for example, a method, an apparatus, a software program or a system. Even if only discussed in the context of a single form of implementation (for example, discussed only as a method or a device), the implementation of features discussed may also be implemented in other forms (for example a program). The gateway may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device.

Additionally, the methods may be implemented by instructions being performed by a processor in the wireless device system, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced or got by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

According to different embodiment of the invention, a most energy efficient channel bandwidth setting is allocated according to power consumption for a receiver. According to another variant of the invention, a most energy efficient channel bandwidth setting is allocated according to power consumption for a transmitter. It would enable to take into account power consumption on a device running on battery (typically a user device). According to a variant of invention, the method and device aggregate the power consumption on both sides, i.e. on receiver side and on transmitter side: in this case, an estimation of a power consumption according to at least a channel bandwidth is performed for a given direction (uplink or downlink) as the sum of power consumption on transmitter side (e.g. respectively on an access point transmitting to a user device and on an user device transmitting to an access point) and of power consumption on receiver side, respectively on a user device transmitting to a user device and on an access point transmitting to a user device) and of power consumption on receiver side for a given bandwidth. According to specific variants, the power consumptions on different sides may be each affected by different coefficient to get the global consumption.

## Claims

1.    Method of bandwidth allocation in a wireless system, **characterized in that** it comprises an allocation (45) of a most energy efficient channel bandwidth setting according to a required application data rate and based on a power consumption and a throughput performance.

2.    Method according to claim 1, comprising:

   - determination (43) of an estimation of an energy consumption settings to a required application data rate for at least one channel bandwidth setting, based on a power consumption estimation and an effective throughput estimation;
   - selection (44) of a most energy efficient channel bandwidth among the estimated energy consumption settings for the required application data rate, resulting in a selected channel bandwidth for the required data rate;
   - allocation (45) of the selected channel bandwidth for the required data rate.

3.    Method according to claim 2, **characterized in that** the method comprises an estimation of a power consumption including a measurement of power consumption according to at least a channel bandwidth;

4.    Method according to any of claims 2 or 3, **characterized in that** the method comprises an estimation of effective throughput including a measurement of throughput according to at least a channel bandwidth.

5.    Method according to any of claims 2 to 4, **characterized in that** selection of a most energy efficient channel bandwidth is made among the channel bandwidths, which have an estimated throughput greater that the required application data rate.

**6.** Method according to any of claims 2 to 5, **characterized in that** the selection of a most energy efficient channel bandwidth is taking into account another parameter, among at least a channel associated to a channel bandwidth or wireless configuration.

**7.** Method according to any of claims 2 to 6, **characterized in that** the required data rate is obtained from an estimation of a real traffic demand.

**8.** Method according to any of claims 2 to 6, **characterized in that** the required data rate is obtained from a request of data rate.

**9.** Wireless system device (10, 11, 12), **characterized in that** it comprises a module of allocation (505) of a most energy efficient channel bandwidth setting according to a required application data rate and based on a power consumption and a throughput performance.

**10.** Wireless system device, according to claim 9, comprising:

- a module of determination (502) of an estimation of an energy consumption settings to a required application data rate for at least one channel bandwidth setting, based on a power consumption estimation and an effective throughput estimation;
- a selector (505) adapted to select a most energy efficient channel bandwidth among the estimated energy consumption settings for the required application data rate, resulting in a selected channel bandwidth for the required data rate;
- a module of allocation (505) of the selected channel bandwidth for the required data rate;

**11.** Wireless system device, according to any of claims 9 and 10, characterized that it comprises functionalities of an access point (10) to a wireless network.

**12.** Wireless system device, according to claim 11, **characterized in that** it comprises gateway functionalities, including an interface between an external network and a wireless local area network.

**13.** Wireless system device, according to any of claims 9 to 10, characterized that it comprises wireless user device (11, 12) functionalities.

**14.** Wireless system, **characterized in that** it comprises wireless system devices including at least an access point (10) and at least a wireless device (11, 12), and **in that** the wireless system comprises at least a module of allocation of a most energy efficient channel bandwidth setting according to a required application data rate and based on a power consumption and a throughput performance of at least one of the wireless system device adapted to receive data from another wireless system device.

**Fig. 1**

**Fig. 2**

**Fig. 3**

40 —⌒ ( Start )

power consumption
= f(channel bandwidth) ⌒ 41

effective throughput
= f(channel bandwidth) ⌒ 42

Energy Consumption
determination ⌒ 43

Selection of Channel Bandwidth ⌒ 44

Allocation of Channel Bandwidth ⌒ 45

**Fig. 4**

**Fig. 5**

**Fig. 6**

Europäisches
Patentamt
European
Patent Office
Office européen
des brevets

## EUROPEAN SEARCH REPORT

Application Number

EP 13 30 6058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2009/323600 A1 (CHANDRA RANVEER [US] ET AL) 31 December 2009 (2009-12-31)<br>* page 2, paragraph [0021] *<br>* page 7, paragraph [0074] *<br>* figures 2,8 *<br>* page 10, paragraph [0108] *<br>* page 3, paragraph [0031] *<br>* page 4, paragraph [0046] *<br>* page 6, paragraph [0058] *<br>* page 7, paragraph [0074] - paragraph [0075] *<br>* claim 20 *<br>* page 4, paragraph [0041] *<br>* page 2, paragraph [0028] - page 3 * | 1,9,14<br><br>2-8,<br>10-13 | INV.<br>H04W72/04 |
| Y | WO 2011/000710 A1 (ERICSSON TELEFON AB L M [SE]; SUNDSTROEM LARS [SE]; ANDERSSON STEFAN []) 6 January 2011 (2011-01-06)<br>* page 1, line 27 - line 31 *<br>* page 4, line 22 - line 27 *<br>* page 4, line 33 - line 36 *<br>* claims 1,3,6-8 *<br>* page 5, line 15 - line 19 *<br>* page 5, line 30 - line 33 *<br>* page 8, line 24 - line 26 *<br>* page 14, line 14 - line 19 *<br>* page 4, line 36 - page 5, line 6 * | 2-8,<br>10-13 | |
| A | US 2009/069057 A1 (HAARTSEN JACOBUS CORNELIS [NL] ET AL)<br>12 March 2009 (2009-03-12)<br>* abstract *<br>* page 1, paragraph [0009] - paragraph [0012] *<br>* page 2, paragraph [0028] *<br>* page 4, paragraph [0050] *<br>* figures 1,5-8 * | 1-14 | |

TECHNICAL FIELDS
SEARCHED (IPC)

H04W

The present search report has been drawn up for all claims

| Place of search | Date of completion of the search | Examiner |
|---|---|---|
| The Hague | 28 November 2013 | Lebiedowski, Adam |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 13 30 6058

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2013

| Patent document cited in search report | | Publication date | Patent family member(s) | | Publication date |
|---|---|---|---|---|---|
| US 2009323600 | A1 | 31-12-2009 | NONE | | |
| WO 2011000710 | A1 | 06-01-2011 | CN | 102474280 A | 23-05-2012 |
| | | | EP | 2449686 A1 | 09-05-2012 |
| | | | JP | 2012531775 A | 10-12-2012 |
| | | | US | 2011003609 A1 | 06-01-2011 |
| | | | WO | 2011000710 A1 | 06-01-2011 |
| US 2009069057 | A1 | 12-03-2009 | NONE | | |

EPO FORM P0459

For more details about this annex : see Official Journal of the European Patent Office, No. 12/82